# EUROPEAN PATENT APPLICATION

(11) **EP 4 613 914 A1**
(43) Date of publication of application: **10.09.2025**
(21) Application number: 23885375.8
(22) Date of filing: 08.09.2023
(51) Int. Cl.: C25B 15/08, C25B 1/04, C25B 9/00, C25B 9/70, C25B 15/023, C25B 15/027

(54) **WATER ELECTROLYSIS SYSTEM AND METHOD FOR CONTROLLING SAME**

(30) Priority: 31.10.2022 JP 2022174552
(71) Applicant: Hitachi, Ltd., Tokyo 100-8280 (JP)
(72) Inventor: MIZUKAMI, Takaaki, Tokyo 100-8280 (JP); SUGIMASA, Masatoshi, Tokyo 100-8280 (JP); FUJITA, Shinji, Tokyo 100-8280 (JP)
(74) Representative: Mewburn Ellis LLP
(86) International application number: PCT/JP2023/032789
(87) International publication number: WO 2024/095609

(57) **Abstract**

A water electrolysis system (100) includes a plurality of water electrolysis stacks (101) connected in series to a DC power supply, a plurality of gas storage tanks (e.g., a hydrogen gas tank (102), a low-pressure hydrogen gas tank (102a)) for storing a gas generated in the water electrolysis stacks, a first gas pressure adjustment mechanism (e.g., a hydrogen gas tank pressure adjustment valve (113)) for adjusting pressure of the gas generated in the entire plurality of water electrolysis stacks, a plurality of second gas pressure adjustment mechanisms (e.g., a water electrolysis stack hydrogen gas pressure adjustment valve (115), a water electrolysis stack low-pressure hydrogen gas pressure adjustment valve (115a)) for adjusting pressure of a gas generated in each of the water electrolysis stacks, and a control device (150) for controlling the first gas pressure adjustment mechanism and the second gas pressure adjustment mechanism.

## Description

### Technical Field

The present invention relates to a water electrolysis system and a method for controlling the system, and particularly relates to an apparatus for producing hydrogen on a large scale by electrolysis of water using renewable energy or the like and a method for controlling the apparatus.

### Background Art

Hydrogen as opposed to fossil fuels is clean energy that does not emit carbon dioxide during combustion. Thus, the hydrogen has attracted attention as one of clean energy for global warming countermeasures, and technological development related to production, transportation, and utilization of the hydrogen has been advanced.

NPL 1 describes an apparatus for producing hydrogen on a large scale by electrolysis of water using renewable energy or the like and a method for controlling the apparatus, in which development of a novel semiconductor device for a water electrolysis system on a large scale is in progress from the viewpoint of stability of power quality and reduction in installation area.

NPL 2 describes a water electrolysis system on a large scale exceeding 20 MW, in which many electrolysis stacks are required to operate with one power supply for highly efficient operation of a power supply.

PTL 1 discloses a method as a configuration for controlling each electrolysis stack for improving electrolysis efficiency of the electrolysis stack, the method being for controlling ON and OFF of operation per a string (series part), and ON and OFF of operation of each stack in the string, to follow a maximum power point (MPP) of renewable energy (solar power generation).

PTL 2 discloses a method for controlling an input current by individually adjusting power of each water electrolysis stack in accordance with fluctuation in the amount of power supplied from renewable energy (solar power generation) to maximize electrolysis efficiency of the water electrolysis stack.

### Citation List

### Patent Literature

PTL 1: JP 2016-518519 A
PTL 2: JP 2007-31813 A

### Non Patent Literature

NPL 1: Final report of "Green project" as one of hydrogen production projects in Europe (https://www.waterstofnet.eu/_asset/_public/Greenports/Gree nports-final-report-Feb-2021.pdf)
NPL 2: IRENA's report "Green Hydrogen cost reduction" (https://www.irena.org/- /media/Files/IRENA/Agency/Publication/2020/Dec/IRENA_Green_ hydrogen_cost_2020.pdf)

### Summary of Invention

### Technical Problem

The development of the novel semiconductor device described in NPL 1 has a problem of time for practical use, cost, and securing the amount of manufacturing. In particular, new manufacturing processes may be unable to meet demand for 500 GW until 2050 due to taking time to start up the processes.

Examples of a method for collectively operating many electrolytic stacks described in NPL 2 include multiple series connection of the electrolytic stacks. When voltage is increased by the multiple series connection, a general large DC power supply can be used, and thus the electrolytic stacks can be expected to be implemented on a large scale at low cost.

Although ON and OFF of the operation of the string or each electrolysis stack is controlled in PTL 1, there is a problem that control of turning off the operation increases a load of an electrolysis stack other than the string or the electrolysis stack and reduces the amount of production of hydrogen and oxygen.

Although the electrolysis stacks connected in parallel can be controlled in PTL 2, there is a problem that the electrolysis stacks connected in series cannot be sufficiently controlled when the electrolysis stacks are deteriorated in performance.

It is an object of the present invention to provide a water electrolysis system capable of efficiently producing hydrogen by individually controlling each of electrolysis stacks even when some of the electrolysis stacks is deteriorated in performance or deterioration of the electrolysis stacks is increased during production of the hydrogen using renewable energy such as solar power generation or wind power generation while satisfying economic efficiency, safety, convenience, and global warming countermeasures for the hydrogen produced as clean energy, and a method for controlling the water electrolysis system.

### Solution to Problem

To achieve the above object, there are provided a plurality of water electrolysis stacks connected in series to a DC power supply of the present invention, a plurality of gas storage tanks different in gas pressures for storing gas generated in the water electrolysis stacks, a first gas pressure adjustment mechanism for adjusting pressure of the gas generated in the plurality of water electrolysis stacks, a plurality of second gas pressure adjustment mechanisms for adjusting pressure of the gas generated in each of the water electrolysis stacks, and a control device for controlling the first gas pressure adjustment mechanism and the second gas pressure adjustment mechanism. Other aspects of the present invention will be described in an embodiment described later.

### Advantageous Effects of Invention

According to the present invention, even when some of electrolysis stacks deteriorates in performance or the electrolysis stacks deteriorate greatly, hydrogen can be efficiently produced by individually controlling each of the electrolysis stacks.

### Brief Description of Drawings

[FIG. 1] FIG. 1 is a diagram illustrating a device configuration of a water electrolysis system according to the present embodiment.
[FIG. 2] FIG. 2 is a diagram illustrating an example of pressure adjustment of a water electrolysis stack group.
[FIG. 3] FIG. 3 is an image diagram of an IV curve changed by pressure adjustment of an electrolysis stack.
[FIG. 4] FIG. 4 is a flowchart illustrating pressure adjustment control of the electrolysis stack according to the present embodiment.

### Description of Embodiments

Hereinafter, an embodiment of the present invention will be described with reference to the drawings. The same components are denoted by the same reference numerals, and duplicated description may not be described. The present invention is not limited to the embodiment below.

In general, water electrolysis apparatuses are connected in parallel to a power supply, and control output (the amount of gas generation) by controlling a current of each water electrolysis apparatus. In contrast, multiple series connection causes all stacks connected in series to be constant in current. When a value of the current is lowered corresponding to a stack having low electrolysis performance or a stack having large deterioration, the amount of hydrogen production decreases in whole. When the value of the current is not lowered, these stacks deteriorate in conversion efficiency.

The inventors have found control of operating conditions of an electrolysis stack for producing hydrogen without reducing electrolysis efficiency as much as possible, even when each electrolysis stack deteriorates in performance or deteriorates greatly.

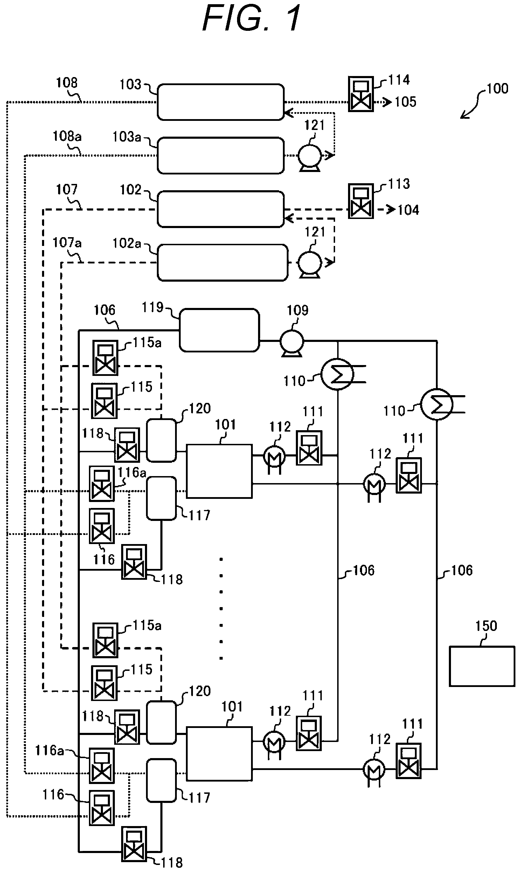

FIG. 1 is a diagram illustrating a device configuration of a water electrolysis system 100 according to the present embodiment. The water electrolysis system 100 illustrated in FIG. 1 mainly includes a water electrolysis stack 101, a hydrogen gas tank 102, a low-pressure hydrogen gas tank 102a that stores a gas having a lower pressure than the hydrogen gas tank 102, an oxygen gas tank 103, a low-pressure oxygen gas tank 103a that stores a gas under pressure lower than that in the oxygen gas tank 103, a water pipe 106, a hydrogen gas pipe 107, a low-pressure hydrogen gas pipe 107a connected to the low-pressure hydrogen gas tank 102a, an oxygen gas pipe 108, and a low-pressure oxygen gas pipe 108a connected to the low-pressure oxygen gas tank 103a.

The water electrolysis system 100 further includes a water feed pump 109, a large-sized cooler 110, a water flow rate adjustment valve 111, a small-sized cooler 112, a hydrogen gas tank pressure adjustment valve 113, an oxygen gas tank pressure adjustment valve 114, a water electrolysis stack hydrogen gas pressure adjustment valve 115, a water electrolysis stack low-pressure hydrogen gas pressure adjustment valve 115a, a water electrolysis stack oxygen gas pressure adjustment valve 116, a water electrolysis stack low-pressure oxygen gas pressure adjustment valve 116a, an oxygen gas and water separation tank 117, a water electrolysis stack water discharge valve 118, a water tank 119, a hydrogen gas and water separation tank 120, a pressurization pump 121, and a control device 150.

The control device 150 includes a central processing unit (CPU), a random access memory (RAM), and a read only memory (ROM), for example. The control device 150 is implemented by developing a predetermined program (control program), which is stored in the ROM, in the RAM and executing the program with the CPU. The program here is for causing a computer to execute a control method. The control device 150 is illustrated without control signal lines and the like connected to each control target device such as the water flow rate adjustment valve 111 to be controlled.

The water electrolysis system 100 has a hydrogen production process similar to that of a general water electrolysis system. The water feed pump 109 supplies water from the water tank 119 to an oxygen electrode side of each water electrolysis stack 101. Hydrogen and oxygen are generated by applying predetermined voltage to the water electrolysis stack 101 to electrolyze water. The generated hydrogen passes through the hydrogen gas pipe 107 under predetermined pressure adjusted by the water electrolysis stack hydrogen gas pressure adjustment valve 115 and is recovered in the hydrogen gas tank 102. Then, the hydrogen is adjusted to predetermined pressure by the hydrogen gas tank pressure adjustment valve 113 to supply a hydrogen gas 104 to the outside. The generated oxygen is discharged from the water electrolysis stack 101 together with non-electrolyzed water, and separated in the oxygen gas and water separation tank 117 to be adjusted to predetermined pressure by the electrolysis stack oxygen gas pressure adjustment valve. Then, the oxygen is recovered in the oxygen gas tank 103 through the oxygen gas pipe 108, and adjusted to predetermined pressure by the oxygen gas tank pressure adjustment valve 114 to supply an oxygen gas 105 to the outside. The water separated in the oxygen gas and water separation tank 117 is adjusted to predetermined pressure by the water electrolysis stack water discharge valve 118, and collected in the water tank 119 to be supplied again to the water electrolysis stack 101 through the water feed pump. Although FIG. 1 illustrates no power supply line, the water electrolysis stack 101 is connected in series and parallel so that a general large DC power supply can be applied. The number of water electrolysis stacks connected in series and parallel is not particularly limited.

Although the water electrolysis system 100 of FIG. 1 is assumed to be a system that supplies water to both the oxygen electrode side and a hydrogen electrode side, the water may be supplied only to the oxygen electrode side in a water electrolysis stack of a solid polymer type of a proton permeation type.

The low-pressure hydrogen gas tank 102a, the low-pressure oxygen gas tank 103a, the low-pressure hydrogen gas pipe 107a, the low-pressure oxygen gas pipe 108a, the water electrolysis stack low-pressure hydrogen gas pressure adjustment valve 115a, and the water electrolysis stack low-pressure oxygen gas pressure adjustment valve 116a are unique facilities of the water electrolysis system 100 of the present embodiment.

The water electrolysis stack 101 typically has variations in characteristics and variations in electrolysis voltage due to deterioration, so that the water electrolysis stack varies in electrolysis efficiency even when the same current flows.

The water electrolysis system 100 of the present embodiment is configured such that electrolysis voltage of each water electrolysis stack is measured, and the water electrolysis stack with high electrolysis voltage is reduced in pressure of the water electrolysis stack by adjusting the water electrolysis stack low-pressure hydrogen gas pressure adjustment valve 115a and the water electrolysis stack low-pressure oxygen gas pressure adjustment valve 116a. This configuration enables operation performed with increased electrolysis efficiency by lowering voltage of the water electrolysis stack with high electrolysis voltage to reduce a difference in voltage from other electrolysis stacks.

At this time, a combination of hydrogen and oxygen discharged from the water electrolysis stack under pressure having been reduced are under pressure that is lower than pressure of a combination of hydrogen and oxygen discharged from the water electrolysis stack with low electrolysis voltage, and thus both the combinations cannot flow together to the same gas piping system. Thus, both the combinations are stored in the low-pressure hydrogen gas tank 102a and the low-pressure oxygen gas tank 103a using a low-pressure hydrogen gas line indicated by the low-pressure hydrogen gas pipe 107a and the low-pressure oxygen gas pipe 108a, and then are fed to the hydrogen gas tank 102 and the oxygen gas tank 103 by the pressurization pump 121.

The water electrolysis stack hydrogen gas pressure adjustment valve 115, the water electrolysis stack low-pressure hydrogen gas pressure adjustment valve 115a, the water electrolysis stack oxygen gas pressure adjustment valve 116, and the water electrolysis stack low-pressure oxygen gas pressure adjustment valve 116a are each always monitored for opening and closing degrees to prevent a backflow due to a difference in pressure from other electrolysis stacks, and are each controlled by a control algorithm for controlling pressures of both gas tanks by controlling the hydrogen gas tank pressure adjustment valve 113, the oxygen gas tank pressure adjustment valve 114, and the pressurization pump 121 according to a situation of the monitoring.

Next, a pressure adjustment system of the water electrolysis system 100 in the present embodiment and a method for controlling the pressure adjustment system will be described. Although the present embodiment will be described based on the water electrolysis system 100 illustrated in FIG. 1, a pressure system connected to the gas tanks is not limited to the configuration of FIG. 1 because a plurality of pressure systems can be installed instead of two systems of normal pressure and low pressure illustrated in FIG. 1.

The water electrolysis system 100 of the present embodiment is configured such that electrolysis voltage of each water electrolysis stack is measured, and the water electrolysis stack with high electrolysis voltage is reduced in pressure by not only closing the water electrolysis stack hydrogen gas pressure adjustment valve 115 and the water electrolysis stack oxygen gas pressure adjustment valve 116, but also adjusting the water electrolysis stack low-pressure hydrogen gas pressure adjustment valve 115a and the water electrolysis stack low-pressure oxygen gas pressure adjustment valve 116a. This configuration enables operation performed with increased electrolysis efficiency by lowering voltage of the water electrolysis stack with high electrolysis voltage to reduce a difference in voltage from other water electrolysis stacks.

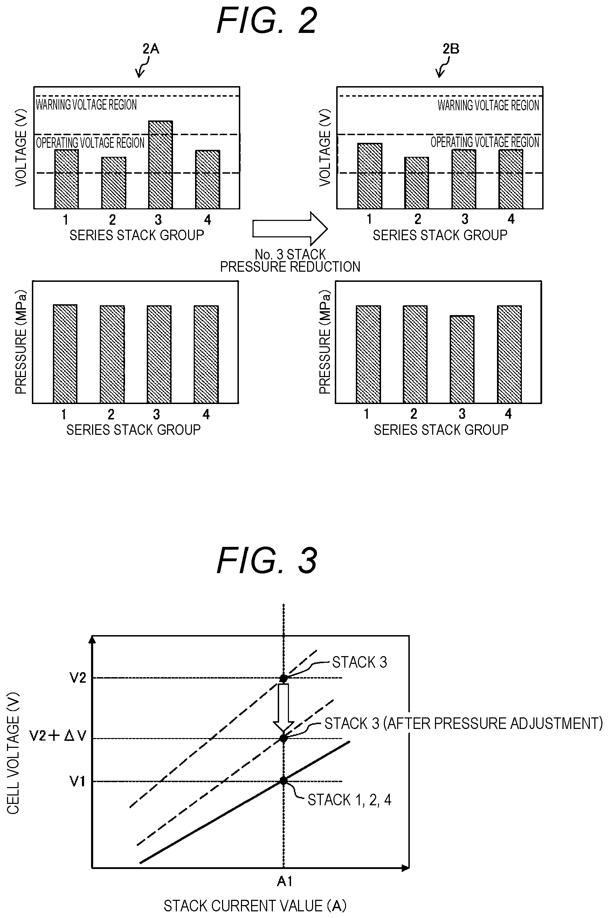

FIG. 2 is a diagram illustrating an example of pressure adjustment of a water electrolysis stack group. FIG. 2 illustrates a configuration example of water electrolysis stacks 1 to 4 instead of an actual number of water electrolysis stacks, and thus the water electrolysis system of the present invention is not limited to the number of water electrolysis stacks in FIG. 2. A series stack group may be composed of one water electrolysis stack, or may be composed of a plurality of water electrolysis stacks electrically connected.

When the water electrolysis system 100 of the present embodiment is operated, an operating voltage region and a warning voltage region of the water electrolysis stack 101 are desirably determined. The operating voltage region enables hydrogen to be stably produced with high efficiency for a long period of time, and the warning voltage region is expected to cause the water electrolysis stack to deteriorate in performance and to have breakage when the water electrolysis stack is operated for a predetermined time. These voltage regions depend on water electrolysis stack characteristics, so that the characteristics of the water electrolysis stack to be used need to be measured to set each of the voltage regions before an actual water electrolysis system is constructed.

FIG. 2 includes a graph 2A that shows voltage of each of the water electrolysis stacks 1 to 4 during operation. It can be seen that although the water electrolysis stacks 1, 2, and 4 operate in the operating voltage region, the water electrolysis stack 3 operates at voltage in the warning voltage region. Thus, the water electrolysis stack low-pressure hydrogen gas pressure adjustment valve 115a and the water electrolysis stack low-pressure oxygen gas pressure adjustment valve 116a connected to the water electrolysis stack 3 are adjusted to reduce pressure of a hydrogen gas and/or an oxygen gas in the water electrolysis stack in the present embodiment. Both the gases may be each adjusted to similar pressure, or may be each changed in pressure within a range in which differential pressure between a hydrogen generating electrode and an oxygen generating electrode is allowable. Consequently, the hydrogen gas and/or the oxygen gas only in the water electrolysis stack 3 can be adjusted for pressure. As a result, voltage of the water electrolysis stack 3 can be adjusted to the operating voltage region while voltage of each of the water electrolysis stacks 1, 2, and 4 is maintained as shown in a graph 2B of FIG. 2.

FIG. 3 is an image diagram of an IV curve changed by pressure adjustment of an electrolysis stack. FIG. 3 is an example showing I-V characteristics before and after pressure adjustment of each of the water electrolysis stacks 1 to 4 shown in FIG. 2. When the water electrolysis stacks 1 to 4 are each energized with current having a value of A1 amperes and the water electrolysis stacks 1, 2, and 4 each have a voltage of V1 volts at that time, the water electrolysis stack 3 is expected to have a voltage of V2 volts. The water electrolysis stack 3 has high resistance, and thus is predicted to have electrolysis voltage higher than that of the other water electrolysis stacks. The water electrolysis stacks 1 to 4 are each constantly energized with the current having the value of A1 amperes, the water electrolysis stack 3 having high resistance is predicted to have a higher temperature than other water electrolysis stacks. Although an example of pressure adjustment by voltage measurement is shown in the present invention, temperature of each water electrolysis stack is preferably measured together to achieve more accurate pressure adjustment.

Additionally, the water electrolysis stack 3 after the pressure adjustment is expected to have a voltage dropping to "V2 + ΔV" volts. Then, ΔV varies depending on a gas pressure difference before and after the pressure adjustment, and is proportional to this pressure difference. Thus, when pressure adjustment of each water electrolysis stack is required in the water electrolysis system 100 of the present embodiment, the water electrolysis system 100 desirably has not only a calculation algorithm for calculating electrolysis voltage at a target pressure, but also a control algorithm for controlling the water electrolysis stack hydrogen gas pressure adjustment valve 115, the water electrolysis stack low-pressure hydrogen gas pressure adjustment valve 115a, the water electrolysis stack oxygen gas pressure adjustment valve 116, and the water electrolysis stack low-pressure oxygen gas pressure adjustment valve 116a based on a value of the electrolysis voltage.

When the water electrolysis stack 3 is cooled by the water flow rate adjustment valve 111 and/or the small-sized cooler 112, the amount of heat generation decreases due to resistance reduction by pressure adjustment to lower temperature of the water electrolysis stack, and thus the amount of heat to be removed by the cooling needs to be adjusted. The amount of heat generation of the water electrolysis stack is an electrolysis overvoltage, i.e., a value obtained by multiplying a value obtained by subtracting theoretical electrolysis voltage from the electrolysis voltage by a current value. The pressure adjustment causes the water electrolysis stack 3 to have the amount of heat generation reduced by "A1 × ΔV" from "A1 × (V2 - theoretical electrolysis voltage)" to "A1 × (V2 + ΔV - theoretical electrolysis voltage). Thus, when pressure adjustment of each water electrolysis stack is required in the water electrolysis system 100 of the present invention, the water electrolysis system 100 desirably has not only a calculation algorithm for calculating electrolysis voltage at target pressure, but also a control algorithm for controlling the water flow rate adjustment valve 111 and/or the small-sized cooler 112 based on a value of the electrolysis voltage.

The pressure adjustment of each of the water electrolysis stacks may be performed multiple times. Each of the water electrolysis stacks having entered the warning pressure region can continue to operate without reducing the voltage efficiency and further without reducing the hydrogen production by adjusting pressure in a similar process. However, deterioration of an electrode of an electrolysis cell is typically accelerated when electrolysis voltage increases to a certain level or more due to oxidation of the electrode itself. Thus, when pressure adjustment is performed on the water electrolysis stack 3 multiple times and the value of "V2 + ΔV" reaches voltage at which the electrode of the cell is assumed to deteriorate, for example, the electrolysis voltage needs to be reduced by lowering a current value of electrolysis. The water electrolysis system 100 of the present embodiment uses electrolysis stacks in a multiple series connection, so that the amount of production of hydrogen decreases in whole when the current value is lowered. Thus, when the water electrolysis system 100 of the present invention is used, the water electrolysis system 100 preferably has not only an algorithm for calculating and comparing profit obtained from the amount of hydrogen that can be produced during a predetermined operating period after the current value is lowered and profit obtained from the amount of hydrogen that can be produced during a predetermined operating period after the water electrolysis stack is replaced at an equipment cost, but also an algorithm for issuing an instruction to stop the water electrolysis system 100 and replace a specific water electrolysis stack when the profit is high even at the equipment cost of replacing the water electrolysis stack.

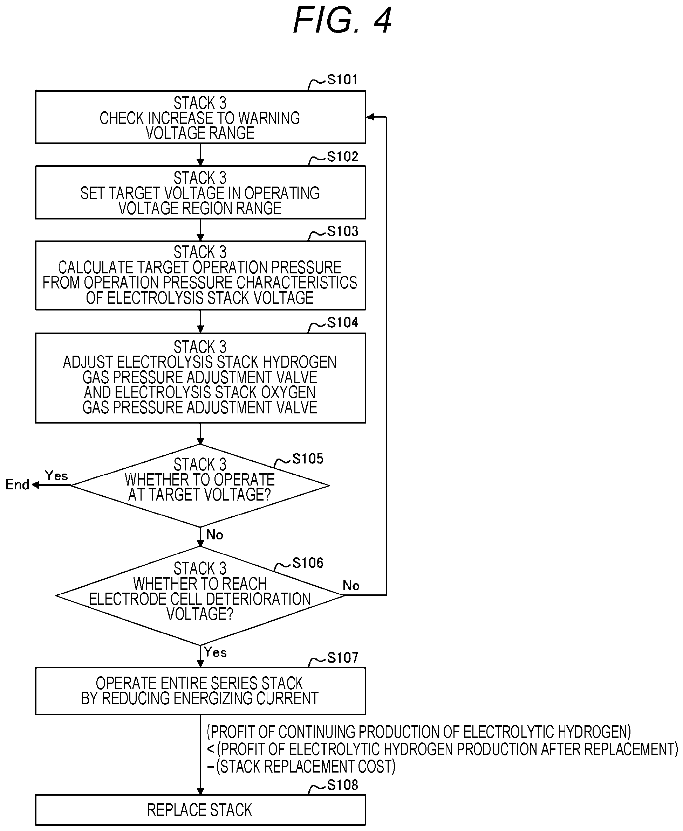

FIG. 4 is a flowchart illustrating pressure adjustment control of the electrolysis stack according to the present embodiment. FIG. 4 shows a pressure adjustment process flow of the water electrolysis system 100 of the present embodiment. The present process flow is created focusing on the water electrolysis stack 3 in FIGS. 2 and 3, and an actual flow may be performed on a specific water electrolysis stack requiring pressure adjustment.

The process flow illustrated in FIG. 4 will be briefly described below.

First, presence of the water electrolysis stack 3 in which the electrolysis voltage has increased to the warning voltage region is detected (step S101). Then, a target voltage for lowering the electrolysis voltage of the water electrolysis stack 3 to the operating voltage region is set (step S102). Based on electrolysis characteristics (pressure dependence) of the water electrolysis stack 3, an electrolysis voltage of "V2 + ΔV" volts at target pressure is calculated (step S103).

Here, the water electrolysis stack low-pressure hydrogen gas pressure adjustment valve 115a and the water electrolysis stack low-pressure oxygen gas pressure adjustment valve 116a connected to the water electrolysis stack 3 are adjusted to reduce pressure of a hydrogen gas and/or an oxygen gas in the water electrolysis stack. Both the gases may be each adjusted to similar pressure, or may be each changed in pressure within a range in which differential pressure between a hydrogen generating electrode and an oxygen generating electrode is allowable (step S104).

When water electrolysis stack voltage has reached the operating voltage region after the pressure is changed (Yes in step S105), operation ends. When the water electrolysis stack voltage has not reached the operating voltage region (No in step S105), it is checked whether the water electrolysis stack voltage has reached voltage at which an electrode of a cell is assumed to deteriorate (step S106). When the water electrolysis stack voltage has not reached the voltage (No in step S106), processing returns to step S101, and the operation of changing pressure is performed again. When the water electrolysis stack voltage reaches voltage at which the electrode of the cell is assumed to deteriorate, a current value of electrolysis is desirably lowered.

When the water electrolysis stack voltage has reached voltage at which the electrode of the cell is assumed to deteriorate(Yes in step S106), and after the current value is lowered (step S107), profit obtained from the amount of hydrogen that can be produced during a predetermined operation period and profit obtained from the amount of hydrogen that can be produced during a predetermined operation period after the water electrolysis stack is replaced at an equipment cost are calculated and compared. When the profit is high even at the equipment cost of replacing the water electrolysis stack, the water electrolysis system 100 is stopped to replace a specific electrolysis stack (step S108).

Applying the water electrolysis system 100 of the present embodiment and the method for controlling the water electrolysis system 100 enables stably continuous hydrogen production with high electrolysis efficiency and at low cost in a multiple series electrolysis system capable of using a general large DC power supply.

The above points are summarized as follows. When a matter without being descried above is described below, the matter described below can be applied to the contents described above.

(1) The water electrolysis system 100 includes a plurality of water electrolysis stacks 101 connected in series to a DC power supply, a plurality of gas storage tanks (e.g., the hydrogen gas tank 102, the low-pressure hydrogen gas tank 102a) different in gas pressure for storing a gas generated in the water electrolysis stacks, a first gas pressure adjustment mechanism (e.g., the hydrogen gas tank pressure adjustment valve 113) for adjusting pressure of the gas generated in the plurality of water electrolysis stacks, a plurality of second gas pressure adjustment mechanisms (e.g., the water electrolysis stack hydrogen gas pressure adjustment valve 115, the water electrolysis stack low-pressure hydrogen gas pressure adjustment valve 115a) for adjusting pressure of a gas generated in each of the water electrolysis stacks, and a control device 150 for controlling the first gas pressure adjustment mechanism and the second gas pressure adjustment mechanism.
(2) The water electrolysis system 100 of item (1) is configured such that the plurality of gas storage tanks includes a first gas storage tank (e.g., the hydrogen gas tank 102) and a second gas storage tank (e.g., the low-pressure hydrogen gas tank 102a) that stores a gas under pressure lower than that in the first gas storage tank, the plurality of second gas pressure adjustment mechanisms includes a first gas storage tank gas pressure adjustment mechanism (e.g., the water electrolysis stack hydrogen gas pressure adjustment valve 115) connected to the first gas storage tank (e.g., the hydrogen gas tank 102) and a second gas storage tank gas pressure adjustment mechanism (e.g., the water electrolysis stack low-pressure hydrogen gas pressure adjustment valve 115a) connected to the second gas storage tank (e.g., the low-pressure hydrogen gas tank 102a), and the first gas storage tank and the second gas storage tank are connected through the pressurization pump 121.
(3) The water electrolysis system 100 according to item (2) is configured such that each of the water electrolysis stacks 101 includes a voltage measurement instrument (not illustrated), the control device 150 has information on an operating voltage range and a warning voltage range, and when voltage of the water electrolysis stack measured by the voltage measurement instrument reaches the warning voltage range, the control device 150 calculates gas pressure to be reduced to lower the voltage to the operating voltage range.
(4) The water electrolysis system 100 according to item (2) is configured such that each of the water electrolysis stacks 101 includes a voltage measurement instrument (not illustrated), the control device 150 has information on an operating voltage range and a warning voltage range, and when voltage of the water electrolysis stack measured by the voltage measurement instrument reaches the warning voltage range, the control device 150 not only stops the first gas storage tank gas pressure adjustment mechanism (e.g., the water electrolysis stack hydrogen gas pressure adjustment valve 115) corresponding to the water electrolysis stack, but also adjusts the second gas storage tank gas pressure adjustment mechanism (e.g., the water electrolysis stack low-pressure hydrogen gas pressure adjustment valve 115a) to lower gas pressure of the water electrolysis stack.
(5) The water electrolysis system 100 according to item (2) is configured such that each of the water electrolysis stacks includes a pressure gauge (not illustrated) that measures gas pressure of the water electrolysis stack, and the control device 150 has information on an operating pressure range and a warning pressure range, and not only stops the first gas storage tank gas pressure adjustment mechanism (e.g., the water electrolysis stack hydrogen gas pressure adjustment valve 115) corresponding to the water electrolysis stack, but also adjusts the second gas storage tank gas pressure adjustment mechanism (e.g., the water electrolysis stack low-pressure hydrogen gas pressure adjustment valve 115a) to lower the gas pressure of the water electrolysis stack, when the gas pressure measured by the pressure gauge reaches the warning pressure range.
(6) The water electrolysis system 100 according to item (1) is configured such that the gas is hydrogen and has a hydrogen system. When a main object is hydrogen production, an oxygen system is not necessarily required, and oxygen having been produced may be released into the atmosphere. Consequently, installation cost and maintenance cost of an apparatus and a facility of the water electrolysis system 100 can be reduced.
(7) The water electrolysis system 100 according to item (1) is configured such that the gas includes hydrogen and oxygen, and the first gas pressure adjustment mechanism and the plurality of second gas pressure adjustment mechanisms are provided in each of a hydrogen system and an oxygen system.
(8) The water electrolysis system 100 according to any one of items (1) to (7) further includes a temperature measuring instrument (not illustrated) that measures temperature of each of the water electrolysis stacks or temperature of water discharged from each of the water electrolysis stacks, and a water temperature adjustment mechanism (e.g., the water feed pump 109, etc.) that adjusts temperature of water supplied to each of the water electrolysis stacks, in which the control device 150 controls the water temperature adjustment mechanism to cool the water when the temperature of any one of the water electrolysis stacks changes.
(9) The water electrolysis system 100 according to item (8) is configured such that the water temperature adjustment mechanism includes a liquid feeder (water feed pump 109) that supplies water to the entire plurality of water electrolysis stacks, a first cooler (large-sized cooler 110) that adjusts temperature of the water supplied to the entire plurality of water electrolysis stacks, and a valve (the water flow rate adjustment valve 111) and a second cooler (small-sized cooler 112) that are provided in a water supply pipe (water pipe 106) between the liquid feeder) or the first cooler and each of the water electrolysis stacks 101, and when temperature of any one of the water electrolysis stacks changes, the control device 150 opens the valve corresponding to the water electrolysis stack or cools the water supplied to the water electrolysis stack by the second cooler corresponding to the water electrolysis stack.
(10) The water electrolysis system 100 according to item (1) is configured such that at least some of the plurality of water electrolysis stacks 101 connected in series to the DC power supply are connected in parallel.
(11) A method for controlling the water electrolysis system 100 according to item (2), the method including the steps of: setting an operating voltage range and a warning voltage range in advance from electrolysis characteristics of each of the water electrolysis stacks; measuring voltage of each of the water electrolysis stacks; stopping the first gas storage tank gas pressure adjustment mechanism corresponding to the water electrolysis stack when the measured voltage reaches the warning voltage range; and adjusting the second gas storage tank gas pressure adjustment mechanism to lower gas pressure of the water electrolysis stack.
(12) The method for controlling the water electrolysis system 100, according to item (11), is configured such that when the measured voltage reaches the warning voltage range, gas pressure to be reduced to lower the voltage to the operating voltage range is calculated.
(13) The method for controlling the water electrolysis system 100, according to item (11), is configured such that when not only voltage of each of the water electrolysis stacks reaches the warning voltage range, but also the voltage is not lowered to the operating voltage range even when the second gas pressure adjustment mechanism corresponding to the water electrolysis stack is adjusted, a current value of the entire water electrolysis system is lowered.
(14) A method for controlling the water electrolysis system 100 according to item (2), the method including the steps of: setting an operating pressure range and a warning pressure range in advance from electrolysis characteristics of each of the water electrolysis stacks; measuring gas pressure of each of the water electrolysis stacks; and when the measured pressure reaches the warning pressure range, adjusting the second gas pressure adjustment mechanism corresponding to the water electrolysis stack to lower gas pressure of the water electrolysis stack.
(15) The method for controlling the water electrolysis system 100, according to any one of items (11) to (14), further includes the steps of: measuring the amount of adjustment of the second gas pressure adjustment mechanism; measuring gas pressure of each of the water electrolysis stacks; and controlling the first gas pressure adjustment mechanism according to the measured amount of adjustment of the second gas pressure adjustment mechanism and the measured gas pressure of each of the water electrolysis stacks to prevent a backflow of generated gas to corresponding one of the water electrolysis stacks.
(16) The method for controlling the water electrolysis system 100, according to any one of items (11) to (14), further includes the steps of: measuring temperature of each of the water electrolysis stacks; and adjusting the amount of water to be supplied to each of the water electrolysis stacks or temperature of water to be supplied to each of the water electrolysis stacks when the temperature of each of the water electrolysis stacks is changed due to change in gas pressure of corresponding one of the water electrolysis stacks.

### Reference Signs List

100 water electrolysis system
101 water electrolysis stack
102 hydrogen gas tank (gas storage tank, first gas storage tank)
102a low-pressure hydrogen gas tank (gas storage tank, second gas storage tank)
103 oxygen gas tank (gas storage tank, first gas storage tank)
103a low-pressure oxygen gas tank (gas storage tank, second gas storage tank)
104 hydrogen gas
105 oxygen gas
106 water pipe (water supply pipe)
107 hydrogen gas pipe
107a low-pressure hydrogen gas pipe
108 oxygen gas pipe
108a low-pressure oxygen gas pipe
109 water feed pump (liquid feeder)
110 large-sized cooler (first cooler)
111 water flow rate adjustment valve (valve)
112 small-sized cooler (second cooler)
113 hydrogen gas tank pressure adjustment valve (first gas pressure adjustment mechanism)
114 oxygen gas tank pressure adjustment valve (first gas pressure adjustment mechanism)
115 water electrolysis stack hydrogen gas pressure adjustment valve (second gas pressure adjustment mechanism, first gas storage tank gas pressure adjustment mechanism)
115a water electrolysis stack low-pressure hydrogen gas pressure adjustment valve (second gas pressure adjustment mechanism, second gas storage tank gas pressure adjustment mechanism)
116 water electrolysis stack oxygen gas pressure adjustment valve (second gas pressure adjustment mechanism, first gas storage tank gas pressure adjustment mechanism) 116a water electrolysis stack low-pressure oxygen gas pressure adjustment valve (second gas pressure adjustment mechanism, second gas storage tank gas pressure adjustment mechanism)
117 oxygen gas and water separation tank
118 water electrolysis stack water discharge valve
119 water tank
120 hydrogen gas and water separation tank
121 pressurization pump
150 control device

## Claims

1. A water electrolysis system comprising:
a plurality of water electrolysis stacks connected in series to a DC power supply;
a plurality of gas storage tanks different in gas pressures for storing gas generated in the water electrolysis stacks;
a first gas pressure adjustment mechanism for adjusting pressure of the gas generated in the plurality of water electrolysis stacks;
a plurality of second gas pressure adjustment mechanisms for adjusting pressure of the gas generated in each of the water electrolysis stacks; and
a control device for controlling the first gas pressure adjustment mechanism and the second gas pressure adjustment mechanism.

2. The water electrolysis system according to claim 1, wherein
the plurality of gas storage tanks includes a first gas storage tank and a second gas storage tank that stores a gas under pressure lower than pressure in the first gas storage tank,
the plurality of second gas pressure adjustment mechanisms includes a first gas storage tank gas pressure adjustment mechanism connected to the first gas storage tank and a second gas storage tank gas pressure adjustment mechanism connected to the second gas storage tank, and
the first gas storage tank and the second gas storage tank are connected through a pressurization pump.

3. The water electrolysis system according to claim 2, wherein
each of the water electrolysis stacks includes a voltage measurement instrument,
the control device has information on an operating voltage range and a warning voltage range, and
when voltage of the water electrolysis stack measured by the voltage measurement instrument reaches the warning voltage range, the control device calculates gas pressure to be reduced to lower the voltage to the operating voltage range.

4. The water electrolysis system according to claim 2, wherein
each of the water electrolysis stacks includes a voltage measurement instrument,
the control device has information on an operating voltage range and a warning voltage range, and
when voltage of the water electrolysis stack measured by the voltage measurement instrument reaches the warning voltage range, the control device not only stops the first gas storage tank gas pressure adjustment mechanism corresponding to the water electrolysis stack, but also adjusts the second gas storage tank gas pressure adjustment mechanism to lower gas pressure of the water electrolysis stack.

5. The water electrolysis system according to claim 2, wherein
each of the water electrolysis stacks includes a pressure gauge that measures gas pressure of the water electrolysis stack,
the control device has information on an operating pressure range and a warning pressure range, and
when the gas pressure measured by the pressure gauge reaches the warning pressure range, the control device not only stops the first gas storage tank gas pressure adjustment mechanism corresponding to the water electrolysis stack, but also adjusts the second gas storage tank gas pressure adjustment mechanism to lower the gas pressure of the water electrolysis stack.

6. The water electrolysis system according to claim 1, wherein the gas is hydrogen and has a hydrogen system.

7. The water electrolysis system according to claim 1, wherein
the gas includes hydrogen and oxygen, and
the first gas pressure adjustment mechanism and the plurality of second gas pressure adjustment mechanisms are provided in each of a hydrogen system and an oxygen system.

8. The water electrolysis system according to any one of claims 1 to 7, further comprising:
a temperature measuring instrument that measures temperature of each of the water electrolysis stacks or temperature of water discharged from each of the water electrolysis stacks; and
a water temperature adjustment mechanism that adjusts temperature of water supplied to each of the water electrolysis stacks,
wherein the control device controls the water temperature adjustment mechanism to cool the water when the temperature of any one of the water electrolysis stacks changes.

9. The water electrolysis system according to claim 8, wherein
the water temperature adjustment mechanism includes:
a liquid feeder that supplies water to the entire plurality of water electrolysis stacks;
a first cooler that adjusts temperature of the water supplied to the entire plurality of water electrolysis stacks; and
a valve and a second cooler that are provided in a water supply pipe between the liquid feeder or the first cooler and each of the water electrolysis stacks, and
when temperature of any one of the water electrolysis stacks changes, the control device opens the valve corresponding to the water electrolysis stack or cools the water supplied to the water electrolysis stack by the second cooler corresponding to the water electrolysis stack.

10. The water electrolysis system according to claim 1, wherein at least some of the plurality of water electrolysis stacks connected in series to the DC power supply are connected in parallel.

11. A method for controlling a water electrolysis system, the water electrolysis system including:
a plurality of water electrolysis stacks connected in series to a DC power supply;
a plurality of gas storage tanks different in gas pressures for storing gas generated in the water electrolysis stacks;
a first gas pressure adjustment mechanism for adjusting pressure of the gas generated in the plurality of water electrolysis stacks;
a plurality of second gas pressure adjustment mechanisms for adjusting pressure of the gas generated in each of the water electrolysis stacks; and
a control device for controlling the first gas pressure adjustment mechanism and the second gas pressure adjustment mechanism,
wherein the plurality of gas storage tanks includes a first gas storage tank and a second gas storage tank that stores a gas under pressure lower than pressure in the first gas storage tank,
the plurality of second gas pressure adjustment mechanisms includes a first gas storage tank gas pressure adjustment mechanism connected to the first gas storage tank and a second gas storage tank gas pressure adjustment mechanism connected to the second gas storage tank, and
the first gas storage tank and the second gas storage tank are connected through a pressurization pump,
the method comprising the steps of:
setting an operating voltage range and a warning voltage range in advance from electrolysis characteristics of each of the water electrolysis stacks;
measuring voltage of each of the water electrolysis stacks;
stopping the first gas storage tank gas pressure adjustment mechanism corresponding to the water electrolysis stack when the measured voltage reaches the warning voltage range; and
adjusting the second gas storage tank gas pressure adjustment mechanism to lower gas pressure of the water electrolysis stack.

12. The method for controlling a water electrolysis system, according to claim 11, wherein when the measured voltage reaches the warning voltage range, gas pressure to be reduced to lower the voltage to the operating voltage range is calculated.

13. The method for controlling a water electrolysis system, according to claim 11, wherein when not only voltage of each of the water electrolysis stacks reaches the warning voltage range, but also the voltage is not lowered to the operating voltage range even when the second gas pressure adjustment mechanism corresponding to the water electrolysis stack is adjusted, a current value of the entire water electrolysis system is lowered.

14. A method for controlling a water electrolysis system, the water electrolysis system including:
a plurality of water electrolysis stacks connected in series to a DC power supply;
a plurality of gas storage tanks different in gas pressures for storing gas generated in the water electrolysis stacks;
a first gas pressure adjustment mechanism for adjusting pressure of the gas generated in the plurality of water electrolysis stacks;
a plurality of second gas pressure adjustment mechanisms for adjusting pressure of the gas generated in each of the water electrolysis stacks; and
a control device for controlling the first gas pressure adjustment mechanism and the second gas pressure adjustment mechanism,
wherein the plurality of gas storage tanks includes a first gas storage tank and a second gas storage tank that stores a gas under pressure lower than pressure in the first gas storage tank,
the plurality of second gas pressure adjustment mechanisms includes a first gas storage tank gas pressure adjustment mechanism connected to the first gas storage tank and a second gas storage tank gas pressure adjustment mechanism connected to the second gas storage tank, and
the first gas storage tank and the second gas storage tank are connected through a pressurization pump,
the method comprising the steps of:
setting an operating pressure range and a warning pressure range in advance from electrolysis characteristics of each of the water electrolysis stacks;
measuring gas pressure of each of the water electrolysis stacks; and
when the measured pressure reaches the warning pressure range, adjusting the second gas storage tank gas pressure adjustment mechanism corresponding to the water electrolysis stack to lower gas pressure of the water electrolysis stack.

15. The method for controlling a water electrolysis system, according to any one of claims 11 to 14, further comprising the steps of:
measuring an amount of adjustment of the second gas pressure adjustment mechanism;
measuring gas pressure of each of the water electrolysis stacks; and
controlling the first gas pressure adjustment mechanism according to the measured amount of adjustment of the second gas pressure adjustment mechanism and the measured gas pressure of each of the water electrolysis stacks to prevent a backflow of generated gas to corresponding one of the water electrolysis stacks.

16. The method for controlling a water electrolysis system, according to any one of claims 11 to 14, further comprising the steps of:
measuring temperature of each of the water electrolysis stacks; and
adjusting an amount of water to be supplied to each of the water electrolysis stacks or temperature of water to be supplied to each of the water electrolysis stacks when the temperature of each of the water electrolysis stacks is changed due to change in gas pressure of corresponding one of the water electrolysis stacks.
